# EUROPEAN PATENT SPECIFICATION

(11) **EP 2 020 269 B1**
(45) Date of publication and mention of the grant of the patent: **31.07.2013**
(21) Application number: 08158173.8
(22) Date of filing: 12.06.2008
(51) Int. Cl.: B23C 3/34, E06B 9/15, E06B 9/266

(54) **Milling cutter device for the slats of roller shutters.**
Fräswerkzeugvorrichtung für die Latten von Rollläden
Dispositif de fraise à fileter pour les lattes de volets roulants

(30) Priority: 30.07.2007 IT VE20070051
(43) Date of publication of application: 04.02.2009
(73) Proprietor: DALLAN S.P.A., 31033 Castelfranco Veneto (IT)
(72) Inventor: Dallan, Sergio, 31033 Castelfranco Veneto (IT)
(74) Representative: Piovesana, Paolo

(56) References cited:
- DE-A1- 3 742 874
- DE-A1- 19 544 899
- DE-C- 410 381
- JP-A- 2000 230 548
- JP-A- 2003 117 812

## Description

The present invention relates to a milling cutter device for the slats of roller shutters according to the preamble of claim 1. Such a device is known from DE 3742874 A1.

The slats of roller shutters are known to be filled during their construction with sound-absorbent/sound-insulating material to improve their characteristics.

Known plastic plugs with a tapering base provided with tabs are inserted into the ends of the slats to prevent axial sliding between continuous slats.

If the filling material is sufficiently soft, the plugs are inserted by traditional pressers, whereas if the material is very hard special plugs must be used consisting of two pins connected together by the flange, with the result that corresponding holes have to be made in the slat filling material, with consequent time wastage and increased manufacturing cost.

The object of the invention is to eliminate this drawback by means of an improved device which enables traditional slat plugs, i.e. plugs with a tapering portion and a flange, to be used with both soft and hard fillings.

This object is attained according to the invention by a milling cutter device for the slatted sheets of roller shutters as described in claim 1.

A preferred embodiment of the invention is further clarified hereinafter with reference to the accompanying drawings, in which:

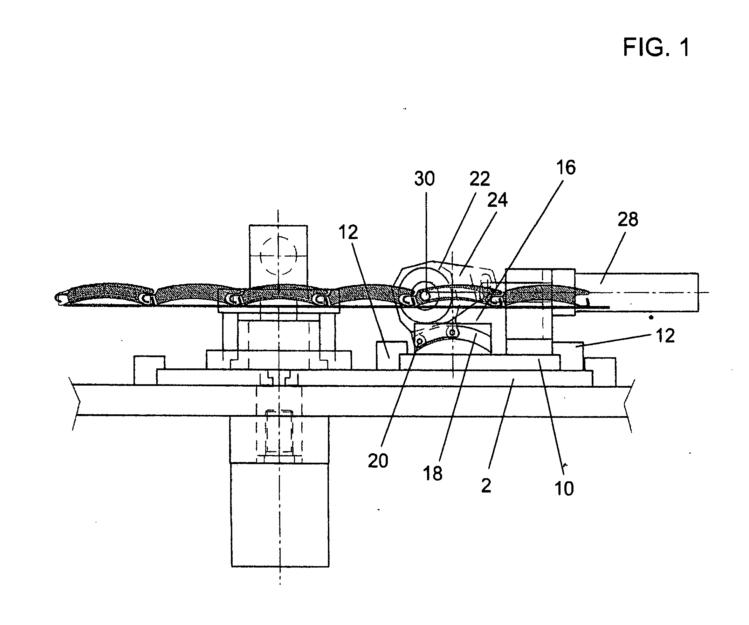

Figure 1 is a side view of a device according to the invention, and
Figures 2, 3, 4 and 5 are plan views thereof during operation.

As can be seen from the figures, the device of the invention comprises substantially a base 2, disposed on both sides of a line 4 for positioning the sheet 6 of slats 8 in roller shutters, and on which a slide 10 rests, guided along shoulders 12 and driven by a pneumatic cylinder 14.

On the slide 10 a block 16 is mounted, comprising a curved guide channel 18 equal to the curvature of the slats 8.

A pair of sliders 20 are engaged in said channel and are rigid with a milling cutter 22 retained by a flange 24 hinged to the end of the piston rod 26 of a pneumatic cylinder 28.

The device of the invention operates in the following manner.

The sheet of slats 8 is advanced stepwise by the conveyor belt 4 and halted in front of the milling cutter 22 with a step equal to the distance between two non-adjacent slats.

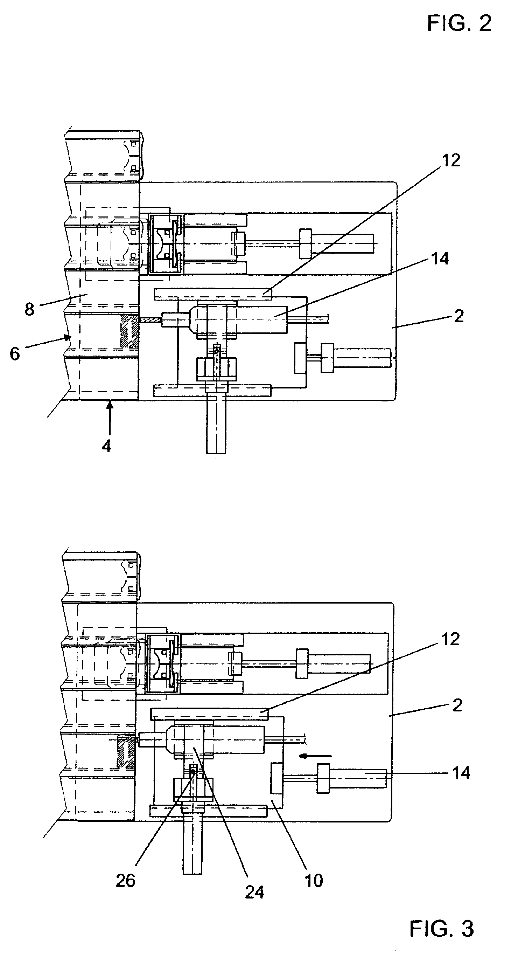

In the starting configuration (see Figure 2), the cylinder 14 is in the configuration with its rod completely retracted while the cylinder 28 is in the configuration with its rod 26 completely extracted.

The milling cutter 22 is then operated and the rod of the cylinder 14 is made to emerge such that the tool 30 penetrates into the slat filling (see Figure 3) to perforate it.

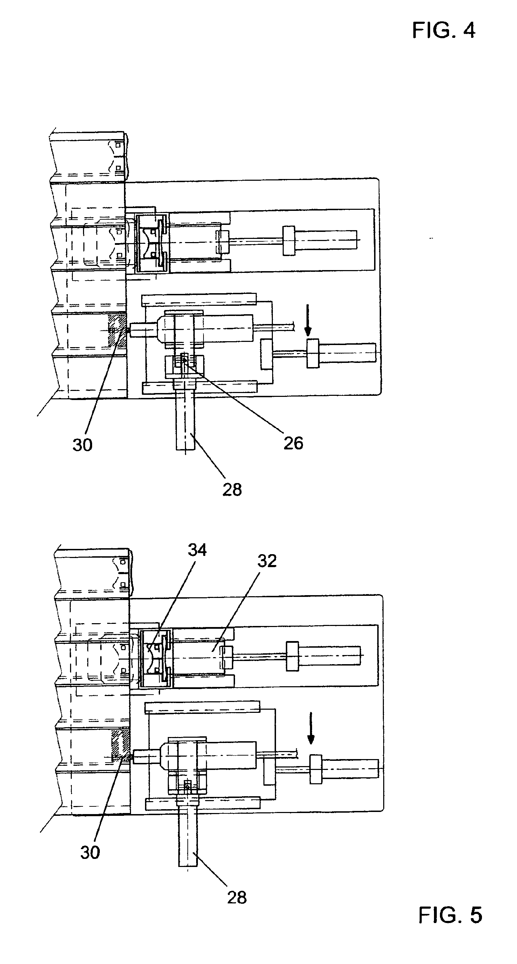

When the tool has completely entered, the rod 26 of the cylinder 28 is made to retract so that the tool 30 forms within the filling a curved seat having the same curvature as the slat (see Figures 4 and 5).

When the tool has reached the end of the slat the rod 26 is made to retract into the cylinder 28, with consequent disengagement of the point of the tool 30 from the now formed seat in the slat.

The rod 26 is again made to emerge in order to return the cylinder 28 to its starting configuration.

During this stage the conveyor belt advances to position the slat comprising the seat in front of the machine 32 for inserting the plugs 34.

From the aforegoing it is apparent that the device of the invention enables traditional tapered plugs to be used even with material of a certain hardness.

## Claims

1. A milling cutter device for the slats (8) of roller shutters. comprising:
- a slide (10) disposed facing the side of the slatted sheet (6)
- means (4) to advance the slatted sheets (6) along an advancement axis,
- means for moving said slide (10) from and towards said slatted sheet (6),
- a milling cutter (22), the tool of which has its axis perpendicular to the advancement axis of the slatted sheet,
- means (28) for moving said milling cutter (22) in one and the other direction parallel to the sheet advancement taxis,
**characterised in that**:
- the means to advance the statted sheet (6) along the advancement axis is a conveyor belt,
- a block (16) is provied, which to rigid with said slide (10) and comprises a curved seat (18) corresponding to the curvature of the slats (8) of the slatted sheet, and
- means for supporting said milling cutter (22) are guided within said seat (18) of said block (16).

2. A device as claimed in claim 1, **characterised in that** the means (14) for moving the slide (10) and the means (28) for moving the milling cutter (22) consist of pneumatic cylinders.

3. A device as claimed in claims 1 and 2, **characterised in that** the support means (24) consist of a flange hinged to the rod (26) of the pneumatic cylinder (28).

## Patentansprüche

1. Fräswerkzeugvorrichtung für die Stäbe (8) von Rollläden, umfassend:
- einen Schlitten (10), der der Seite des Rollladenbehangs (6) zugewandt ist,
- ein Mittel (4) zum Vorschieben des Rollladenbehangs (6) entlang einer Vorschubachse,
- ein Mittel zum Bewegen des Schlittens (10) vom Rollladenbehang (6) weg und auf ihn zu,
- ein Fräswerkzeug (22), dessen Werkzeug seine Achse perpendikulär zur Vorschubachse des Rollladenbehangs aufweist,
- ein Mittel (28) zum Bewegen des Fräswerkzeugs (22) in die eine oder die andere Richtung parallel zur Vorschubachse des Behangs,
**dadurch gekennzeichnet, dass**
- das Mittel zum Vorschieben des Rollladenbehangs (6) entlang der Vorschubachse ein Förderband ist,
- ein Block (16) vorgesehen ist, der starr mit dem Schlitten (10) ist und eine der Krümmung der Stäbe (8) des Rollladenbehangs entsprechende gekrümmte Aufnahme (18) umfasst, und
- ein Mittel (24) zum Tragen des Fräswerkzeugs (22) in der Aufnahme (18) des Blocks (16) geführt wird.

2. Vorrichtung nach Anspruch 1, **dadurch gekennzeichnet, dass** das Mittel (14) zum Bewegen des Schlittens (10) und das Mittel (28) zum Bewegen des Fräswerkzeugs (22) aus Pneumatikzylindern bestehen.

3. Vorrichtung nach den Ansprüchen 1 und 2, **dadurch gekennzeichnet, dass** das Tragmittel (24) aus einem Flansch besteht, der an die Stange (26) des Pneumatikzylinders (28) angelenkt ist.

## Revendications

1. Dispositif de fraise pour les lattes (8) de volets roulants comprenant :
- une glissière (10) disposée en faisant face au côté de la feuille à lattes (6)
- un moyen (4) pour faire avancer la feuille à lattes (6) le long d'un axe d'avancement,
- un moyen pour déplacer ladite glissière (10) à partir de et vers ladite feuille à lattes (6),
- une fraise (22) dont l'outil présente un axe perpendiculaire à l'axe d'avancement de la feuille à lattes,
- un moyen (28) pour déplacer ladite fraise (22) dans l'un et l'autre sens parallèlement à l'axe d'avancement de la feuille,
**caractérisé en ce que**
- le moyen pour faire avancer la feuille à lattes (6) le long d'un axe d'avancement est une bande transporteuse,
- un bloc (16), qui est solidaire avec ladite glissière (10) et comprend un siège (18) incurvé correspondant à la courbure des lattes (8) de la feuille à lattes, est prévu et
- des moyens (24) destinés à supporter ladite fraise (22) sont guidés dans ledit siège (18) dudit bloc (16).

2. Dispositif selon la revendication 1, **caractérisé en ce que** le moyen (14) pour déplacer la glissière (10) et le moyen (28) pour déplacer la fraise (22) consistent en des cylindres pneumatiques.

3. Dispositif selon les revendications 1 et 2, **caractérisé en ce que** le moyen de support (24) consiste en une bride articulée à la tige (26) du cylindre pneumatique (28).
